# EUROPEAN PATENT SPECIFICATION

(11) **EP 3 597 918 B1**
(45) Date of publication and mention of the grant of the patent: **27.10.2021**
(21) Application number: 19186789.4
(22) Date of filing: 17.07.2019
(51) Int. Cl.: F04C 11/00, F04C 2/18, F04C 2/08

(54) **CAVITATION RESISTANT GEAR DRIVEN FUEL PUMP**
KAVITATIONSBESTÄNDIGE ZAHNRADGETRIEBENE KRAFTSTOFFPUMPE
POMPE À CARBURANT À ENTRAÎNEMENT PAR ENGRENAGE RÉSISTANT À LA CAVITATION

(30) Priority: 17.07.2018 US 201816037483
(43) Date of publication of application: 22.01.2020
(73) Proprietor: Hamilton Sundstrand Corporation, Charlotte, NC 28217-4578 (US)
(72) Inventor: POTEET, Steven, 06518, CT Connecticut Hamden (US); SMITH, Blair, South Windsor, CT Connecticut 06074 (US); RANKIN, Kevin M., Windsor, CT Connecticut 06095 (US)
(74) Representative: Dehns

(56) References cited:
- WO-A1-2004/040139
- DE-A1-102008 042 066
- FR-A1- 3 022 951
- US-A- 5 638 600
- US-A1- 2016 208 611
- US-B1- 6 206 667

## Description

### BACKGROUND OF THE INVENTION

### 1. Field of the Invention

The subject invention is directed to fuel pumps, and more particularly, to a gear driven fuel pump used in aerospace applications.

### 2. Description of Related Art

Aircraft gas turbine engines typically receive pressurized fuel from a gear driven fuel pump. A gear driven pump utilizes rotating gears to pump fluid from an inlet to an outlet. In use, a rotating drive gear turns a driven gear at a location where their respective teeth mesh together. Fluid enters the pump inlet and travels between the teeth of the drive gear and a housing, and then between the teeth of the driven gear and the housing. As the gears turn, fluid is pulled through the pump and pushed from the outlet due to a pressure differential between the inlet and outlet.

Both the drive gear and the driven gear are supported within the pump on respective gear shafts. Each gear shaft is supported by a pressure loaded journal bearing and a stationary journal bearing, both of which react to a gear shaft load. The gear shaft load is carried through a fluid film pressure in each journal bearing, between a surface of the gear shaft and a surface of the journal bearing. Bearings such as these, which support their loads on a fluid layer, are known as hydrodynamic bearings.

A common problem with traditional gear pumps operating at high rotational speeds, such as those used in aircraft gas turbine engines, is cavitation erosion of surfaces of the gear teeth and journal bearings. Cavitation is the result of a sudden drop in fluid pressure during operation, which causes dissolved gas bubbles to collapse and implode on a surface with forces up to 1000 Mpa. Cavitation can cause pitting and/or material loss on surfaces of the gear teeth and journal bearings, which may eventually result in degraded volumetric pump capacity, and even premature pump failure due to the forces exerted on the bearings and gear teeth.

It would be beneficial therefore, to design a gear driven pump with cavitation resistant components, such as the gear teeth and journal bearings, so as to reduce the risk of pump failure. The subject invention provides such a solution through the use of cavitation resistant materials and coatings.

Gear pumps are disclosed in DE 10 2008 042066, US 2016/208611 and US 6, 206, 667.

### SUMMARY OF THE DISCLOSURE

The subject invention is directed to a new and useful gear driven pump for an aircraft gas turbine engine, that includes a first gear having a plurality of gear teeth supported for rotation on a gear shaft relative to a second gear, wherein the gear teeth are formed from a steel base material and surfaces of the gear teeth are coated with a cavitation resistant coating material, and a journal bearing for carrying a gear shaft load through a fluid film pressure between a surface of the gear shaft and a surface of the journal bearing, wherein the entirety of the journal bearing is formed from a cavitation resistant base material.

The cavitation resistant base material from which the journal bearing is formed is an aluminum (Al) bronze material.

In accordance with the subject invention, the gear teeth are coated with a vapor-deposited cavitation resistant coating selected from the group consisting of titanium nitride (TiN), titanium aluminum nitride (TiAIN), titanium aluminum silicon nitride (TiAlSiN), titanium aluminum carbonitride (TiAlCN), chromium nitride (CrN), aluminum chromium nitride (AlCrN), and chromium aluminum carbonitride (CrAlCN).

Preferably, the gear teeth are made from CPM10V steel coated with a vapor-deposited cavitation resistant coating of TiAIN. It is envisioned that the gear teeth can be coated by way of physical vapor deposition (PVD), chemical vapor deposition (CVD), or by way of atomic layer deposition (ALD).

### BRIEF DESCRIPTION OF THE DRAWINGS

So that those having ordinary skill in the art will readily understand how to make and use the cavitation resistant gear driven pump of the subject invention without undue experimentation, preferred embodiments thereof will be described in detail herein below with reference to the figures wherein:
Fig. 1 is a perspective view of a gear driven pump for an aircraft gas turbine engine, showing the pump housing, which has a fluid inlet a fluid outlet and an input shaft;
Fig. 2 is a perspective view of the gear driven pump of Fig. 1, with the housing removed to illustrate the internal components thereof, including the intermeshed drive gear and driven gear, and their respective journal bearing sets;
Fig. 3 is an exploded perspective of a drive gear and bearing set, which form part of the gear driven pump shown in Fig. 2;
Fig. 4 is a perspective view of one of the journal bearings shown in Fig. 3, wherein at least portions of the journal bearing are formed from a cavitation resistant base material;
Fig. 5 is a perspective view of a section of the drive gear shown in Fig. 3, wherein surfaces of the gear teeth are coated with a cavitation resistant material;
Fig. 6 is a graph showing comparative data illustrating relative amounts of material weight loss over a period of time for different bearing substrate materials subjected to liquid jet cavitation testing at 5000 psi (34.5 MPa) using a nozzle located 19 mm from the sample, in accordance with ASTM G134; and
Fig. 7 is a graph showing comparative data illustrating relative amounts of material weight loss over a period of time for different gear teeth coating materials subjected to liquid jet cavitation testing at 5000 psi (34.5 MPa) using a nozzle located 19 mm from the sample, in accordance with ASTM G134.

### DETAILED DESCRIPTION OF THE PREFERRED EMBODIMENTS

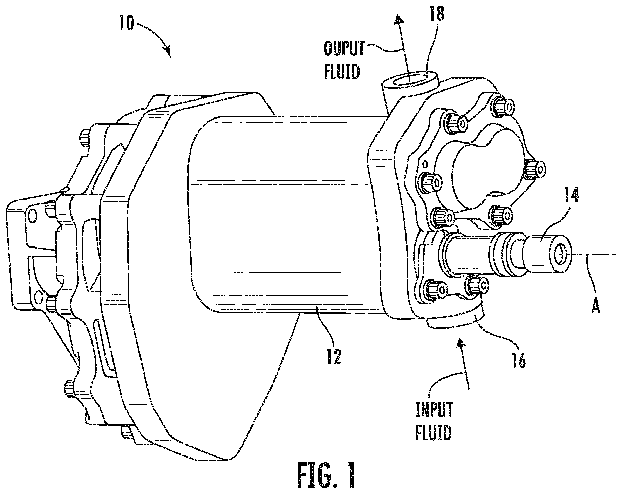

Referring now to the drawings wherein like reference numerals identify similar structural elements or features of the subject invention, there is illustrated in Fig. 1 a gear driven fuel pump that is configured for use in an aircraft gas turbine engine, such as an aircraft main engine or auxiliary engine, and which is designated generally by reference numeral 10.

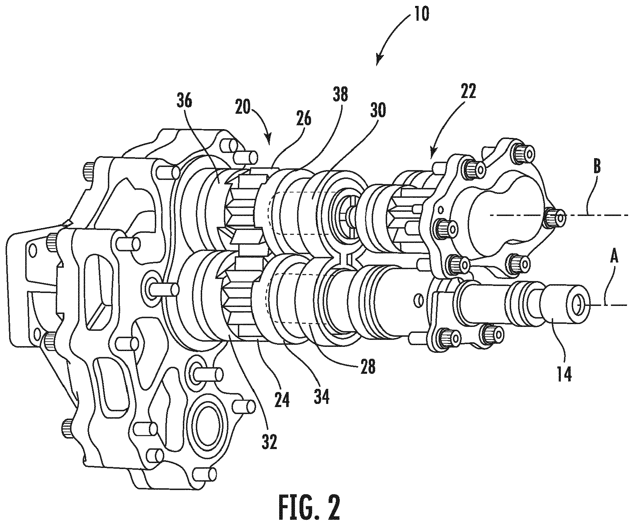

Gear driven pump 10 includes an exterior housing 12 that receives an input shaft 14 and defines a fluid inlet 16 and a fluid outlet 18. Input shaft 14 functions to drive an intermeshed pair of gears (shown in FIG. 2) disposed within housing 12 of gear pump 10, such that fluid entering fluid inlet 16 is pressurized and provided at the fluid outlet 18.

Referring now to Fig. 2, the interior of gear pump 10 is shown with the housing 12 removed to ease illustration of the internal components thereof. In particular, gear pump 10 includes a first stage 20 and a second stage 22, which are serially arranged in relation to one another along a first rotation axis A and a second rotation axis B, respectively.

The first stage 20 includes first and second gears 24 and 26. The first gear 24 is supported for rotation on a first gear shaft 28 about the first rotation axis A. The second gear 26 is supported for rotation on a second gear shaft 30 about rotation axis B. The first and second gears 24 and 26 are rotatably supported is parallel such that the teeth of the first gear 24 are intermeshed with teeth of second gear 26. Furthermore, the load of the first gear shaft 28 is carried by a first set of journal bearings 32 and 34, and the load of the second gear shaft 30 is carried by a second set of journal bearings 36 and 38.

Input shaft 14 is mechanically coupled to the first gear shaft 28 for rotating the second gear shaft 30. More particularly, rotation of first gear shaft 28 rotates the first gear 24 (i.e., the driven gear). As the first gear 24 rotates, the teeth of the first gear 24 intermesh and rotate with the teeth of the second gear 26. This action pumps fluid disposed between the teeth of second gear 26 so that it is subsequently provided at the fluid outlet 18 of the pump 10.

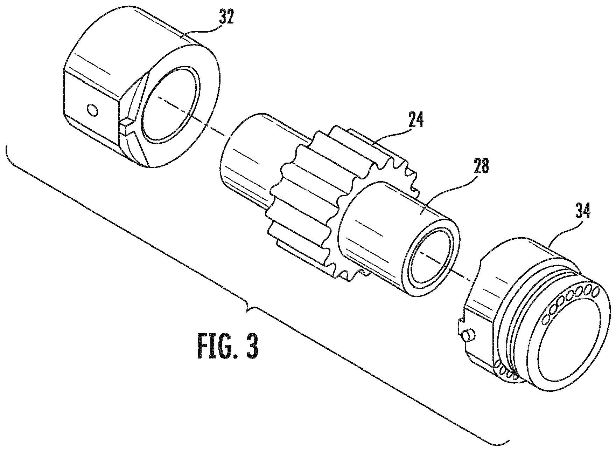

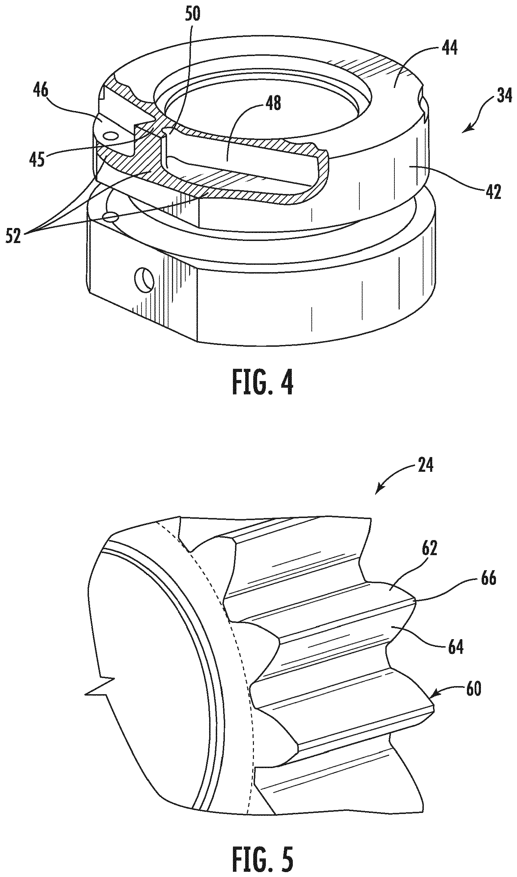

Referring now to Fig. 3, there is illustrated, by way of example, the first gear 24 on gear shaft 28, together with the first set of journal bearings 32 and 34, separate from the pump 10 for ease of illustration. Referring to Fig. 4, by way of example, journal gear 34 includes a bearing body 42 having a bearing surface 44, wherein a bridge 45 is formed to separate a fluid inlet channel 46 from a fluid outlet channel 48. As the first gear 24 rotates, fluid is drawn from the inlet channel 46 at a first pressure and into the outlet channel 48 at a second pressure, wherein the second pressure is higher than the first pressure.

It is known in the art that cavitation can occur when the local fluid pressure falls below the true vapor pressure of a fluid, allowing fluid bubbles to form and violently collapse back into solution. When cavitation occurs on or near a solid surface, the high intensity collapse force or cavitation damage power, similar to a shockwave, can cause high surface stresses and lead to local deterioration of a bearing surface, potentially damaging the surface, such as through pitting and/or material loss through erosion.

In the case of a journal bearing in a gear driven pump, such as the bearing 34 shown in Fig. 4, cumulative pitting can erode the surface contours of the bridge 45 that separates the inlet channel 46 from the outlet channel 48, especially in the recessed area 50 of the outlet channel 48 adjacent to the bridge 45. This erosion can have an adverse impact on fluid handling, diminishing the overall performance of the gear pump 10. Pressure ripple, which is also caused by the fluid interchange at the gear meshing area, increases and decreases the local fluid pressure, which can increase cavitation and may cause other detrimental effects to the system.

It is known to fabricate the journal bearings in a gear driven pump from leaded bronze (e.g. 30% leaded bronze) with a MoS₂ solid lubricant coating. Leaded bronze is a material that tends to prevent galling and seizing, but it is relatively soft and therefore susceptible to cavitation induced pitting. In an effort to combat the impact of cavitation on the surfaces of journal bearings formed from leaded bronze, testing has been done to select a more durable bearing material that can effectively resist wear and erosion caused by cavitation. A particular material of distinction in this regard, which exhibits improved cavitation and wear resistance as compared to leaded bronze, while having a similar coefficient of friction, is an aluminum (Al) bronze material, and in particular, a nickel aluminum (NiAl) bronze material.

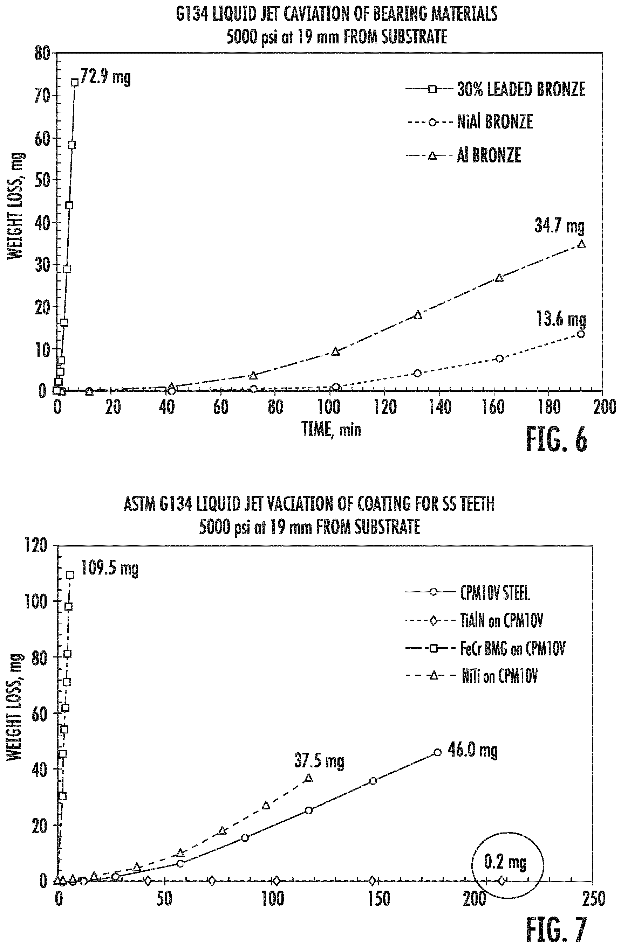

Referring to Fig. 6, there is a graph showing comparative data illustrating relative amounts of material weight loss over a period of time for different bearing substrate materials subjected to liquid jet cavitation testing at 5000 psi(34.5 MPa), using a nozzle located 19 mm from the sample, in accordance with ASTM G134. As shown in Fig. 6, the NiAl bronze bearing substrate material performed comparatively well with only 13.6 mg of weight loss for a period of time in excess of 180 minutes. In comparison, the Al bronze bearing substrate material had a weight loss of 34.7 mg over a similar period of time, while 30% leaded bronze, which is the more common bearing material, had a weight loss of 72.9 mg over a period of less than about 10 minutes.

For these reasons, the first set of journal bearings 32 and 34, and the second set of journal bearings 36 and 38, are formed from an aluminum (Al) bronze material or a nickel aluminum (NiAl) bronze material. Those skilled in the art will readily appreciate that aluminum (Al) bronze is easier to machine than nickel aluminum (NiAl) bronze, so it may be the more preferable bearing material from a manufacturing standpoint, even though nickel aluminum (NiAl) bronze is a more cavitation resistant material.

For example, as shown in Fig. 4, the area 52 forming the bridge 45 and the material that surrounds the inlet channel 46 and the outlet channel 48, which are subjected to cavitation induced pitting and material loss, is formed from an aluminum (Al) bronze material, while the remaining portions of the bearing body 42, which are not typically subjected to cavitation induced pitting or material loss, be formed from a leaded bronze material.

It is envisioned that the aluminum (Al) bronze material can be cladded to the leaded bronze substrate, such as through a laser cladding process or the like. The selected nickel aluminum (NiAl) bronze material has a similar dry coefficient of friction on steel to leaded bronze, while providing improved mechanical stress resistance, rendering the area of the bridge 54 and its surrounding surfaces more resistant to cavitation damage and/or erosion and material loss from cavitation.

The entirety of each of the journal bearings within the first and second stages of the gear driven pump 10 is formed from an aluminum (Al) bronze material, to combat or otherwise resist cavitation. This will reduce deterioration of the journal bearings and other system components, thus maintaining pump and system performance and increasing component operating life.

Referring now to Fig. 5, by way of example, there is illustrated a section of the first gear 24 (i.e., the driven gear), which has a plurality of gear teeth 60 that are fabricated from a steel substrate material, and more particularly, from CPM10V steel. During operation, the gear teeth 60 experience inlet pressures that range from 50-200 psia (344.7 - 1379kPa) and rotational speeds in excess of 6000 rpm with operating temperatures in the range of 200 to 300°F (93.3 - 148.9°C). In such an operating environment, surfaces of the gear teeth 60 are subjected to cavitation, and in particular, the leading edge surfaces 62 of the gear teeth 60, in the areas adjacent to the tooth apex 66, are susceptible to cavitation induced pitting and material loss, and this can also occur to some degree on the trailing surfaces 64 of the teeth 60.

In an effort to combat the impact of cavitation on the surfaces of the gear teeth, testing has been done to select a durable coating material that can effectively resist wear and erosion caused by cavitation. A particular material of distinction in this regard, which exhibits improved wear resistance as compared to an uncoated CPM10V steel base material, is a vapor-deposited cavitation resistant coating of titanium aluminum nitride (TiAlN).

Referring now to Fig. 7, there is a graph showing comparative data illustrating relative amounts of material weight loss over a period of time for different gear teeth coating materials subjected to liquid jet cavitation testing at 5000 psi using a nozzle located 19 mm from the sample, in accordance with ASTM G134. As shown, the TiAIN coating on CPM10V steel substrate performed extremely well with only 0.2 mg of weight loss for a period of time in excess of 200 minutes. In comparison, uncoated CPM10V steel had a weight loss of 46.0 mg over a period of about 180 minutes, and NiTi coated CPM10V steel had a weight loss of about 37.5 mg over a period of about 120 minutes, while an FeCr-based bulk metallic glass (BMG) coated CPM10V steel had a weight loss of 109.5 mg over a period of less than about 10 minutes.

For these reasons, in accordance with a preferred embodiment of the subject invention, the leading and trailing edge surfaces 62 and 64 of the gear teeth 60 of gears 24 and 26 are coated with a vapor-deposited cavitation resistant coating of titanium aluminum nitride (TiAIN). Alternatively, surfaces of the gear teeth 60 may be coated with a vapor-deposited cavitation resistant coating selected from the group consisting of titanium nitride (TiN), titanium aluminum silicon nitride (TiAlSiN), titanium aluminum carbonitride (TiAlCN), chromium nitride (CrN), aluminum chromium nitride (AlCrN), and chromium aluminum carbonitride (CrAlCN).

It is envisioned that the gear teeth 60 can be coated by way of physical vapor deposition (PVD), chemical vapor deposition (CVD), or by way of atomic layer deposition (ALD). The use and application of these cavitation resistant coatings extends part life, which leads to lower overhaul and replacement costs. Moreover, the gear teeth 60 can be recoated, to avoid having to replace the entire gear.

In sum, the use of an aluminum (Al) bronze material for fabricating the journal bearings of a gear pump and a vapor-deposited coating of titanium aluminum nitride (TiAIN) on the teeth of the driving and driven gears of the pump, can reduce or otherwise prevent cavitation induced pitting and/or material loss on critical surfaces of the journal bearings and gear teeth, thereby preventing any degradation in the volumetric capacity of the pump, or premature pump failure due to the cavitation induced forces exerted on the bearings and gear teeth.

While the subject disclosure has been shown and described with reference to preferred embodiments, those skilled in the art will readily appreciate that changes and/or modifications may be made thereto without departing from the scope of the invention as defined by the claims.

## Claims

1. A gear pump, comprising:
a) a first gear (26) having a plurality of gear teeth supported for rotation on a gear shaft (28) relative to a second gear (24), wherein the gear teeth are formed from a steel base material and surfaces of the gear teeth are coated with a cavitation resistant coating material; and
b) a journal bearing (32, 34, 36, 38) for carrying a gear shaft load by way of a fluid film between a first surface of the gear shaft and a second surface of the journal bearing, and **characterised in that** the entirety of the journal bearing is formed from a cavitation resistant base material, wherein the cavitation resistant base material from which the journal bearing is formed is an aluminum (Al) bronze material; and
wherein the gear teeth are coated with a vapor-deposited cavitation resistant coating selected from the group consisting of titanium nitride (TiN), titanium aluminum nitride (TiAIN), titanium aluminum silicon nitride (TiAlSiN), titanium aluminum carbonitride (TiAlCN), chromium nitride (CrN), aluminum chromium nitride (AlCrN), and chromium aluminum carbonitride (CrAlCN).

2. A gear pump as recited in Claim 1, wherein the cavitation resistant base material from which the journal bearing is formed is a nickel aluminum (NiAl) bronze material.

3. A gear pump as recited in Claim 1 or 2, wherein the gear teeth are made from CPM10V steel coated with a vapor-deposited cavitation resistant coating of titanium aluminum nitride (TiAIN).

4. A gear pump as claimed in any preceding claim, for a gas turbine engine,
wherein the first gear is a drive gear (26) having a plurality of driving gear teeth supported for rotation on a first gear shaft relative to a driven gear (24), being the second gear, having a plurality of driven gear teeth supported on a second gear shaft, wherein the gear teeth of the drive gear and the gear teeth of the driven gear are formed from the steel base material and surfaces of the gear teeth are coated with the vapor-deposited cavitation resistant coating; and comprising
a plurality of said journal bearings (32, 34, 36, 38) for respectively carrying gear shaft loads of the drive gear and the driven gear through a fluid film pressure between a surface of a gear shaft and a surface of a journal bearing.

## Patentansprüche

1. Zahnradpumpe, die Folgendes umfasst:
a) ein erstes Zahnrad (26), das eine Vielzahl von Zahnradzähnen aufweist, die zur Drehung auf einer Getriebewelle (28) relativ zu einem zweiten Zahnrad (24) gestützt sind, wobei die Zahnradzähne aus einem Stahlbasismaterial gebildet sind und Flächen der Zahnradzähne mit einem kavitationsbeständigen Beschichtungsmaterial beschichtet sind; und
b) ein Zapfenlager (32, 34, 36, 38) zum Tragen einer Getriebewellenlast mittels eines Fluidfilms zwischen einer ersten Fläche der Getriebewelle und einer zweiten Fläche des Zapfenlagers und **dadurch gekennzeichnet, dass** die Gesamtheit des Zapfenlagers aus einem kavitationsbeständigen Basismaterial gebildet ist, wobei das kavitationsbeständige Basismaterial, aus dem das Zapfenlager gebildet ist, ein Aluminium-(Al-) Bronzematerial ist; und
wobei die Zahnradzähne mit einer aufgedampften kavitationsbeständigen Beschichtung beschichtet sind, die ausgewählt ist aus der Gruppe bestehend aus Titannitrid (TiN), Titanaluminiumnitrid (TiAlN), Titanaluminiumsiliciumnitrid (TiAlSiN), Titanaluminiumcarbonitird (TiAlCN), Chromnitrid (CrN), Aluminiumchromnitrid (AlCrN) und Chromaluminiumcarbonitrid (CrAlCN).

2. Zahnradpumpe nach Anspruch 1, wobei das kavitationsbeständige Basismaterial, aus dem das Zapfenlager gebildet ist, ein Nickelaluminium-(NiAl-)Bronzematerial ist.

3. Zahnradpumpe nach Anspruch 1 oder 2, wobei die Zahnradzähne aus CPM10V Stahl hergestellt sind, der mit einer aufgedampften kavitationsbeständigen Beschichtung aus Titanaluminiumnitrid (TiAlN) beschichtet ist.

4. Zahnradpumpe nach einem der vorhergehenden Ansprüche, für ein Gasturbinentriebwerk,
wobei das erste Zahnrad ein Antriebszahnrad (26) ist, das eine Vielzahl von Antriebszahnradzähnen aufweist, die zur Drehung auf einer ersten Getriebewelle relativ zu einem angetriebenen Zahnrad (24) angeordnet sind, was das zweite Zahnrad ist, das eine Vielzahl von angetriebenen Zahnradzähnen aufweist, die auf einer zweiten Zahnradwelle gestützt sind, wobei die Zahnradzähne des Antriebszahnrads und die Zahnradzähne des angetriebenen Zahnrads aus dem Stahlbasismaterial gebildet sind und die Flächen der Zahnradzähne mit der aufgedampften kavitationsbeständigen Beschichtung beschichtet sind; und die Folgendes umfasst
eine Vielzahl der Zapfenlager (32, 34, 36, 38) zum jeweiligen Tragen von Getriebewellenlasten des Antriebszahnrads und des angetriebenen Zahnrads durch einen Fluidfilmdruck zwischen einer Fläche einer Getriebewelle und einer Fläche eines Zapfenlagers.

## Revendications

1. Pompe à engrenages, comprenant :
a) un premier engrenage (26) ayant une pluralité de dents d'engrenage supporté pour une rotation sur un arbre d'engrenage (28) par rapport à un second engrenage (24), dans laquelle les dents d'engrenage sont formées à partir d'un matériau de base en acier et les surfaces des dents d'engrenage sont revêtues d'un matériau de revêtement résistant à la cavitation ; et
b) un palier lisse (32, 34, 36, 38) pour supporter une charge d'arbre d'engrenage au moyen d'un film fluide entre une première surface de l'arbre d'engrenage et une seconde surface du palier lisse, et **caractérisée en ce que** la totalité du palier lisse est formée à partir d'un matériau de base résistant à la cavitation, dans laquelle le matériau de base résistant à la cavitation à partir duquel le palier lisse est formé est un matériau en bronze d'aluminium (Al) ; et
dans laquelle les dents d'engrenage sont revêtues d'un revêtement résistant à la cavitation déposé en phase vapeur choisi dans le groupe constitué de nitrure de titane (TiN), de nitrure d'aluminium et de titane (TiAlN), de nitrure de titane, d'aluminium et de silicium (TiAlSiN), de carbonitrure de titane et d'aluminium (TiAlCN), de nitrure de chrome (CrN), de nitrure d'aluminium et de chrome (AlCrN) et de carbonitrure d'aluminium et de chrome (CrAlCN).

2. Pompe à engrenages selon la revendication 1, dans laquelle le matériau de base résistant à la cavitation à partir duquel le palier lisse est formé est un matériau de bronze de nickel-aluminium (NiAl).

3. Pompe à engrenages selon la revendication 1 ou 2, dans laquelle les dents d'engrenage sont constituées d'acier CPM10V revêtu d'un revêtement résistant à la cavitation déposé en phase vapeur de nitrure de titane et d'aluminium (TiAlN).

4. Pompe à engrenages selon une quelconque revendication précédente, destinée à un moteur à turbine à gaz,
dans laquelle le premier engrenage est un engrenage d'entraînement (26) ayant une pluralité de dents d'engrenage d'entraînement supporté pour une rotation sur un premier arbre d'engrenage par rapport à un engrenage entraîné (24), étant le second engrenage, ayant une pluralité de dents d'engrenage entraîné supporté sur un second arbre d'engrenage, dans laquelle les dents d'engrenage de l'engrenage d'entraînement et les dents d'engrenage de l'engrenage entraîné sont formées à partir du matériau de base en acier et les surfaces des dents d'engrenage sont revêtues du revêtement résistant à la cavitation déposé en phase vapeur ; et comprenant
une pluralité desdits paliers lisses (32, 34, 36, 38) pour supporter respectivement les charges d'arbre d'engrenage de l'engrenage d'entraînement et de l'engrenage entraîné au moyen d'une pression de film fluide entre une surface d'un arbre d'engrenage et une surface d'un palier lisse.
